# EUROPÄISCHE PATENTSCHRIFT

(11) **EP 2 955 059 B1**
(45) Veröffentlichungstag und Bekanntmachung des Hinweises auf die Patenterteilung: **10.07.2019**
(21) Anmeldenummer: 15170962.3
(22) Anmeldetag: 08.06.2015
(51) Int. Cl.: B60P 1/16

(54) **HYDRAULISCHES KIPPSYSTEM MIT EINER DEN SENKBETRIEB UNTERSTÜTZENDEN PUMPE**
HYDRAULIC TILTING SYSTEM COMPRISING A PUMP THAT SUPPORTS SINKING
SYSTÈME PIVOTANT HYDRAULIQUE DOTÉ D'UNE POMPE ASSURANT LA DESCENTE

(30) Priorität: 10.06.2014 DE 102014211033
(43) Veröffentlichungstag der Anmeldung: 16.12.2015
(73) Patentinhaber: Franz Xaver Meiller Fahrzeug- und Maschinenfabrik-GmbH & Co KG, 80997 München (DE)
(72) Erfinder: Kibler, Florian, 81243 München (DE)
(74) Vertreter: Jordan, Volker Otto Wilhelm

(56) Entgegenhaltungen:
- EP-B1- 1 625 306
- DE-A1-102007 017 472

## Beschreibung

Die Erfindung betrifft ein hydraulisches System zum Kippen wenigstens einer auf einem Kipperfahrzeug befindlichen Kippbrücke, umfassend: wenigstens einen Hydraulikzylinder als Kippantriebsaggregat für die Kippbrücke, wenigstens ein vorzugsweise elektrisch oder pneumatisch ansteuerbares Kippventil zur Steuerung zumindest eines Hubbetriebs und eines Haltebetriebs und gewünschtenfalls auch eines Senkbetriebs des Hydraulikzylinders, und wenigstens eine Hydrauliksenke und wenigstens eine Hydraulikquelle.

Ein derartiges hydraulisches System ist beispielsweise aus der DE 10 2007 017 472 A1 bekannt. Das Kippventil steht mit dem Hydraulikzylinder, einem die Hydrauliksenke bildenden Hydraulikflüssigkeitsreservoir und einer die Hydraulikquelle bildenden Hydraulikpumpe in Hydraulikverbindung. Bei dem Hydraulikzylinder handelt es sich um einen einfach wirkenden Teleskopzylinder, und die Ansteuerung des Teleskopzylinders und damit der Kipphydraulik erfolgt durch ein 3/3-Wege-Ventil mit einem Druckölversorgungsanschluss, an dem die Hydraulikpumpe angeschlossen ist, einem Ölrücklaufanschluss, an den das Hydraulikflüssigkeitsreservoir angeschlossen ist, und einem Hydraulikzylinderanschluss, an dem der Hydraulikzylinder angeschlossen ist. Mit dem Kippventil werden die Funktionen Heben, Halt und Senken bereitgestellt. Hierfür ist ein solches Kippventil in der Regel als proportional steuerndes Ventil ausgeführt.

Ein Senken der Kippbrücke erfolgt durch die entsprechende Schaltstellung am Kippventil aufgrund des Gewichts der Kippbrücke, woraus sich aufgrund der gegebenen effektiven Durchflusswiderstände eine maximale Senkgeschwindigkeit für die Kippbrücke ergibt. Es besteht allerdings die Forderung nach immer leichteren Kippbauten bei erhöhter Nutzlast, typischerweise aber mit gegenüber älteren Lösungen gleich dimensioniertem Hydraulikzylinder zum Vorsehen der kippbaren Nutzlast. Dies hat zur Folge, dass eine geringere Masse zum Einschieben des Hydraulikzylinders aus der ausgefahrenen (aufgekippten) Stellung zur Verfügung steht, was zu höheren Senkseiten führt. Dem kann unter anderem aus wirtschaftlichen Gründen nur bedingt mit größer dimensionierten Kippventilen begegnet werden. Es resultieren so relativ große unproduktive Zeitspannen, in welchen das Kipperfahrzeug allenfalls nur sehr langsam von der Entladestelle wegbewegt werden kann, aufgrund der anderenfalls bestehenden Umsturzgefahr, und unter keinen Umständen am Straßenverkehr teilnehmen darf, insbesondere wegen einer Überschreitung der zulässigen Gesamthöhe. Die Produktivität ist somit unzureichend.

Zum Erreichen einer größeren, nicht mehr durch den Durchfluss durch das Kippventil begrenzten Senkgeschwindigkeit wurden schon verschiedene Ansätze verfolgt. So hat man in der Leitung zwischen dem Hydraulikzylinder und dem Kippventil ein Bypass-Ventil eingefügt, welches durch ein Senken-Signal prinzipiell beliebiger Natur und Herkunft zu öffnen ist, um Öl aus dem Hydraulikzylinder an dem Kippventil vorbei in den Rücklauf oder in das Reservoir zu leiten. Mit solch einem Bypass-Ventil kann die in der Regel gewünschte proportionale Steuerbarkeit der Sinkgeschwindigkeit aber nur dadurch erhalten werden, dass die Bypass-Schaltung entweder abstellbar ist, so dass dann das Senken nur über das Kippventil erfolgt, oder dass das Bypass-Ventil selbst proportional ansteuerbar ist, mit entsprechendem steuerungstechnischen Mehraufwand.

Es wurde auch schon ein Hydraulikzylinder mit einem zweiten Anschluss verwendet, über welchen mittels eines analog zum Bypass-Ventil angesteuerten 2/2-Wege-Ventils ein zusätzlicher Abfluss von Hydrauliköl zur Hydrauliksenke im Senkbetrieb ermöglicht wurde. An dieser Lösung ist nachteilig, dass neben einem zusätzlichen Ventil eine unübliche und Marktanforderungen nicht entsprechende Verrohrungslösung für den Hydraulikzylinder erforderlich ist. Für eine proportionale Steuerbarkeit ist ebenfalls entweder ein proportional ansteuerbares 2/2-Wege-Ventil mit entsprechendem steuerungstechnischem Mehraufwand nötig oder das 2/2-Wege-Ventil muss unabhängig von den Schaltzuständen des Kippventils deaktivierbar sein.

Eine vom Hydraulikaufwand her günstig Lösung verwendet eine hydraulische 3-Wege-Weiche zwischen dem Hydraulikzylinder und dem Hydraulikzylinder-Anschluss des Kippventils, um eine höhere Senkgeschwindigkeit zu erreichen, etwa eine solche 3-Wege-Weiche, wie sie beispielsweise von der Firma AlphaFluid Hydrauliksysteme Müller GmbH (72124 Pliezhausen, Deutschland) beziehbar ist. Eine solche 3-Wege-Weiche ist von einem 2/2-Wege-Sitzventil mit einem Rückschlagventil und einer Steuerdüse gebildet. Zum Heben ist der dem Hydraulikzylinder über die 3-Wege-Weiche zugeführte Zuführ-Volumenstrom mittels des Kippventils proportional steuerbar. Die Druckentlastung der 3-Wege-Weiche zum Senken hat aber dann zur Folge, dass die 3-Wege-Weiche einen nicht steuerbaren Öffnungsquerschnitt für das Ablassen eines Ablass-Volumenstroms aus dem Hydraulikzylinder unter Umgehung des Kippventils zu der Hydrauliksenke freigibt, so dass die Senkgeschwindigkeit nicht proportional steuerbar ist. Dies führt zu einem Verlust von Feinsteuerbarkeit und Bediensicherheit. Ein Vorteil der Lösung mit der 3-Wege-Weiche ist allerdings, dass keine zusätzlichen Steuersignale mit entsprechend größerer Steuerungskomplexität und auch keine zusätzlichen Leitungen zum Hydraulikzylinder erforderlich sind.

All diese ihre Berechtigung und durchaus auch ihre Vorteile habenden Lösungen des Standes der Technik leiden ebenfalls an einer inhärenten Begrenzung der Senkgeschwindigkeit der Kippbrücke, nämlich aufgrund des Staudrucks in der die Hydraulik-Flüssigkeit vom Hydraulik-Zylinder zur Hydrauliksenke abführenden Hydraulik-Verbindung, ggf. einer "Senken-Hydraulikleitung".

Die EP 1 625 306 B1 zeigt ein hydraulisches System zum Betätigen eines Hydraulikzylinders, bei welchem beim Ablassen der Hydraulikflüssigkeit eine Hydraulikflüssigkeit fördernde Pumpe über ein Steuerventil einen Betriebs-Volumenstrom einer Venturi-Düse zuführt, unter Beaufschlagung eines Rückschlagventils mit einem dieses aufsteuernden Steuerdruck. Aus dem Aufsteuern des Rückschlagventils resultiert ein Ablass-Volumenstrom aus dem Hydraulikzylinder, der zur Unterstützung des Ablassens über das Steuerventil einem Ansauganschluss der Venturi-Düse zugeführt wird.

Im Hinblick auf den vorstehend angesprochenen Stand der Technik geht die Erfindung konkreter aus von einem hydraulischen System zum Kippen wenigstens einer auf einem Kipperfahrzeug befindlichen Kippbrücke, umfassend wenigstens einen Hydraulikzylinder als Kippantriebsaggregat für die Kippbrücke, wenigstens ein Kippventil zur Steuerung zumindest eines Hubbetriebs und eines Haltebetriebs des Hydraulikzylinders, wenigstens eine Hydrauliksenke und wenigstens eine Hydraulikquelle sowie wenigstens ein zumindest mit dem Hydraulikzylinder und der Hydrauliksenke in Hydraulikverbindung stehendes Ventil, über welches aus dem Hydraulikzylinder Hydraulikflüssigkeit in einem Ablass-Volumenstrom unter Umgehung des Kippventils zu der Hydrauliksenke für einen Senkbetrieb des Hydraulikzylinders ablassbar ist.

Aufgabe der Erfindung ist, eine verbesserte, eine höhere Senkgeschwindigkeit ermöglichende Lösung bereitzustellen. Zur Lösung dieser Aufgabe wird vorgeschlagen, dass das Hydrauliksystem eine das Ablassen der Hydraulikflüssigkeit in dem Ablass-Volumenstrom unter Umgehung des Kippventils unterstützende Saugpumpe aufweist, über die zumindest ein Teilvolumenstrom des Ablass-Volumenstroms der Hydrauliksenke zuführbar ist.

Mittels der Hydraulikflüssigkeit des Ablass-Volumenstroms ansaugenden Saugpumpe kann der wirksame Staudruck in der Hydraulikverbindung zur Hydrauliksenke reduziert werden, wodurch eine höhere Senkgeschwindigkeit der Kippbrücke ermöglicht wird. Man kann eine durch den gleichen Motor wie ein Motor der Hydraulikquelle angetriebene Saugpumpe vorsehen. Beispielsweise könnte die Saugpumpe mittels einer mechanischen Kupplung antreibbar sein, um eine bedarfsweise Zuschaltung der Saugpumpe zu ermöglichen. Grundsätzlich kommt natürlich auch eine elektrisch antreibbare Saugpumpe in Betracht.

Erfindungsgemäß ist der Ablass-Volumenstrom unter Umgehung des Kippventils zu der Hydrauliksenke ablassbar, so dass das Kippventil den Ablass-Volumenstrom nicht begrenzt. Man kann somit durch entsprechende Dimensionierung des Hydrauliksystems erreichen, dass ein den maximalen Ablass-Volumenstrom bestimmender Öffnungsquerschnitt eine hinreichende Senkgeschwindigkeit für die Kippbrücke ergibt, wozu die erfindungsgemäße Saugpumpe durch Reduzierung des einen begrenzenden Effekt habenden effektiven Staudrucks beiträgt. Dies ermöglicht auch die Verwendung üblicher Hydraulik-Komponenten mit entsprechenden Kostenvorteilen.

Je nach Aufbau und Gewicht einer Kippbrücke gegebenenfalls relativ große, unproduktive Zeitspannen nach dem Entleeren der Kippbrücke, in welcher das Kipperfahrzeug nur sehr langsam von der Entladestelle wegbewegt werden kann (wegen bestehender Umsturzgefahr) und unter keinen Umständen am Straßenverkehr teilnehmen darf (wegen Überschreitung der zulässigen Gesamthöhe), können so vermieden werden. Die beim Betrieb von Nutzfahrzeugaufbauten entstehenden Leerlaufzeiten werden reduziert, und die Produktivität wird dementsprechend deutlich erhöht.

Betreffend das hydraulische System wird vor allem daran gedacht, dass im Haltebetrieb und im Senkbetrieb auf Basis eines momentanen Abgabevolumenstroms der Hydraulikquelle vermittels des Kippventils Hydraulikflüssigkeit in einem Rückführ-Volumenstrom zu der Hydrauliksenke rückführbar ist.

Weiterbildend wird vorgeschlagen, dass die Saugpumpe als Strahlpumpe ausgeführt ist, über die der Rückführ-Volumenstrom als Treibmittelstrom für einen Saugbetrieb der Strahlpumpe der Hydrauliksenke zuführbar ist. Eine solche den sogenannten Venturi-Effekt ausnutzende und auch unter den Bezeichnungen Treibmittelpumpe und Jetpumpe bekannte Pumpe kann kostengünstig bereitgestellt werden und lässt sich energieeffizient betreiben. In einer solchen Strahlpumpe resultiert aus einer in Flussrichtung des Treibmediums sich verkleinerndem Strömungsquerschnitt eine Erhöhung der Strömungsgeschwindigkeit, die eine Saugwirkung zur Folge hat, da der statische Druck des strömenden Mediums kleiner ist als der Druck des angrenzenden Mediums. Eine solche Strahlpumpe arbeitet sehr zuverlässig, mangels beweglicher mechanischer Teile.

Auf Basis der angesprochenen bevorzugten Ausgestaltung kann vorteilhaft vorgesehen werden, dass eine Saugleistung der Strahlpumpe in deren Saugbetrieb mittels eines eine Pumpe der Hydraulikquelle antreibenden Motors steuerbar ist, indem unter Vermittlung dieses Motors der als Treibmittelstrom dienende Rückfuhr-Volumenstrom vergrößert oder verkleinert wird, je nach Bedarf. Es kann so in gewissem Umfang die Senkgeschwindigkeit der Kippbrücke gesteuert werden.

Bevorzugt ist die Strahlpumpe als integraler Bestandteil eines Flüssigkeitsreservoirs der Hydrauliksenke ausgeführt. Es wird insbesondere an eine Integration der Strahlpumpe in eine hydraulische Anschlussanordnung des Flüssigkeitsreservoirs gedacht. Beispielsweise kann man vorsehen, dass ein einer Saugseite zugeordneter Anschluss der Strahlpumpe einen Rücklauf-Anschluss des Flüssigkeitsreservoirs für einen Rücklauf von Hydraulikflüssigkeit von dem Hydraulikzylinder unter Umgehung des Kippventils bildet und ein Treibmittelanschluß der Strahlpumpe einen Rücklauf-Anschluss des Flüssigkeitsreservoirs für einen Rücklauf von Hydraulikmedium vom dem Kippventil bildet.

Eine bevorzugte Ausführungsform zeichnet sich dadurch aus, dass eine/die Saugseite der Strahlpumpe über das Ventil an einem Ablass-Anschluss des Hydraulikzylinders oder einem das Kippventil mit dem Hydraulikzylinder verbindenden Abschnitt des Hydrauliksystems angeschlossen ist, so dass der Ablass-Volumenstrom unter Umgehung des Kippventils für den Senkbetrieb des Hydraulikzylinders über die Strahlpumpe zu der Hydrauliksenke ablassbar ist. Bei dem Ventil kann es sich um ein Bypass-Ventil in einer Bypass-Leitung oder um ein Ventil in einer Hydraulik-Flüssigkeit von einem zweiten Anschluss des Hydraulikzylinders abführenden Leitung handeln. Es wird auf die beiden insoweit als Vorbild dienenden Lösungen gemäß den obigen Ausführungen zum Stand der Technik verwiesen.

Betreffend die Möglichkeit eines Bypass-Ventils in einer Bypass-Leitung oder eines einen zusätzlichen Abfluss von Hydrauliköl zur Hydrauliksenke von einem zweiten Anschluss des Hydraulikzylinders ermöglichenden Ventil in einer zusätzlichen Leitung wird vor allem daran gedacht, dass das Ventil als vorzugsweise elektrisch ansteuerbares 2/2-Wege-Ventil ausgeführt ist.

Weitere bevorzugte Ausführungsformen zeichnen sich dadurch aus, dass das Ventil zu einer zumindest mit dem Hydraulikzylinder, dem Kippventil und der Hydrauliksenke in Hydraulikverbindung stehende Ventilanordnung gehört, über welche in Abhängigkeit von Betriebszuständen zumindest des Kippventils auf Basis des/eines Abgabevolumenstroms der Hydraulikquelle dem Hydraulikzylinder Hydraulikflüssigkeit in einem Zuführ-Volumenstrom für den Hubbetrieb zuführbar und aus dem Hydraulikzylinder Hydraulikflüssigkeit in dem Ablass-Volumenstrom unter Umgehung des Kippventils zu der Hydrauliksenke für den Senkbetrieb ablassbar ist. In diesem Zusammenhang wird daran gedacht, dass es sich bei dem Ventil um das für das Absenken verantwortliche Ventil einer hydraulischen 3-Wege-Weiche handelt, analog zu der entsprechenden Lösung des Standes der Technik, wie oben angesprochen.

Ein demgegenüber wesentliche Vorteile bringende verbesserte Lösung zeichnet sich dadurch aus, die Ventilanordnung und das Kippventil derart ausgeführt und miteinander hydraulisch verbunden sind, dass mittels des Kippventils der Ablass-Volumenstrom stetig steuerbar oder regelbar ist.

Nach diesem Weiterbildungsvorschlag ist der Ablass-Volumenstrom von dem Hydraulikzylinder unter Umgehung des Kippventils zu der Hydrauliksenke ablassbar, so dass das Kippventil den Ablassvolumenstrom nicht begrenzt. Es kann also durch entsprechende Dimensionierung der Ventilanordnung dafür gesorgt werden, dass ein den maximalen Ablass-Volumenstrom bestimmender steuerbarer effektiver Öffnungsquerschnitt so dimensioniert ist, dass der resultierende maximale Ablass-Volumenstrom eine hinreichende Senkgeschwindigkeit für die Kippbrücke ergibt. Da der Ablass-Volumenstrom trotzdem stetig steuerbar oder regelbar ist, bleibt die benötigte Steuerbarkeit des Senkgeschwindigkeit erhalten. Ein Beitrag zur Erhöhung der Senkgeschwindigkeit leistet auch die erfindungsgemäß den Steuerdruck reduzierende Saugpumpe, vorzugsweise Strahlpumpe.

Es können also beim Betrieb von Nutzfahrzeugaufbauten entstehende Leerlaufzeiten gegenüber dem Stand der Technik reduziert werden, wodurch die Produktivität erhöht wird, ohne Verlust von Steuerbarkeit und Bediensicherheit.

Bevorzugt ist vorgesehen, dass das Kippventil über die Ventilanordnung mit dem Hydraulikzylinder in Hydraulikverbindung steht oder bringbar ist. Weiterhin ist es bevorzugt, dass der Zuführ-Volumenstrom dem Hydraulikzylinder von der Hydraulikquelle über das Kippventil und über die Ventilanordnung verlaufende Hydraulikverbindung zuführbar ist.

Das erfindungsgemäße hydraulische System ist so kompatibel zu auf dem Markt üblichen Hydraulik-Anordnungen und Hydraulik-Schaltungen, zum Beispiel zu einer Kippbrückenhydraulik mit einer Hydraulikleitung zwischen dem auch als Kippzylinder ansprechbaren Hydraulikzylinder und dem Kippventil.

Bevorzugt ist vorgesehen, dass die Ventilanordnung wenigstens ein Rückschlagventil umfasst, über welches der Zuführ-Volumenstrom unter Umgehung wenigstens eines anderen Ventils der Ventilanordnung zuführbar ist. Der systemtechnische Aufwand wird so sehr gering gehalten.

Bevorzugte Ausführungsformen zeichnen sich dadurch aus, dass der Ablass-Volumenstrom mittels des Kippventils gemäß einer Ansteuerung des Kippventils oder/und in Abhängigkeit von einem Volumenstrom an Hydraulikflüssigkeit durch das Kippventil steuerbar oder regelbar ist. Besonders zweckmäßig kann man vorsehen, dass für die Herbeiführung des Senkbetriebs Hydraulikflüssigkeit in einem Steuer-Volumenstrom von der Ventilanordnung über das Kippventil zu der Hydrauliksenke ablassbar ist und dass der resultierende Ablass-Volumenstrom stetig von dem Steuer-Volumenstrom abhängt, gewünschtenfalls linear mit diesem ansteigt (also proportional zu diesem ist) oder progressiv oder degressiv mit dem Steuer-Volumenstrom ansteigt. Das Kippventil kann dann wie ein herkömmliches Kippventil ausgeführt sein, wobei der Steuer-Volumenstrom dem Ablass-Volumenstrom aus dem Hydraulikzylinder einer herkömmlichen Lösung ohne erfindungsgemäße Ventilanordnung entspricht, der aufgrund des zu geringen effektiven maximalen Öffnungsquerschnitts des Kippventils nur eine deutlich geringere Senkgeschwindigkeit ermöglichen würde. Es wurde hierbei davon ausgegangen, dass bei einer die Erfindung ausführenden Lösung der Ablass-Volumenstrom größer als der Steuer-Volumenstrom ist, was in der Regel der Fall sein wird und gerade die erhöhte Senkgeschwindigkeit ermöglicht.

Eine besonders bevorzugte Ausgestaltung zeichnet sich dadurch aus, dass die Ventilanordnung wenigstens ein Stetigventil mit wenigstens einem stetig zwischen einer im Hubbetrieb und im Haltebetrieb eingenommenen ersten Stellung und einer im Senkbetrieb bei maximalem Ablass-Volumenstrom eingenommenen zweiten Stellung verstellbares Ventilelement umfasst, welches dafür ausgeführt ist, bei einer Bewegung aus der ersten Stellung in Richtung zur zweiten Stellung wenigstens einen primären Steuerdurchlass aufzusteuern, über den Hydraulikflüssigkeit von einer dem Hydraulikzylinder zugeordneten ersten Seite des Stetigventils zu einer dem Kippventil zugeordneten zweiten Seite des Stetigventils ablassbar ist, in Folge des Ablassens des Steuer-Volumenstroms von der zweiten Seite des Stetigventils über das Kippventil zu der Hydrauliksenke. Das Ventilelement kann dabei eine Gleichgewichts- oder Regelposition einnehmen, in der der Volumenstrom an Hydraulikflüssigkeit durch den aufgesteuerten Öffnungs-Querschnitt des primären Steuerdurchlasses gleich dem von der zweiten Seite des Stetigventils angelassenen Steuer-Volumenstrom ist, so dass auf der zweiten Seite des Stetigventils, gegebenenfalls entsprechend einem Federraum mit einer auf das Ventilelement wirkenden Vorspannfeder, die Summe der zulaufenden und ablaufenden Volumenströme konstant ist und ein definierter, die momentane Position des Ventilelements bestimmender bzw. mitbestimmender Druck auf der zweiten Seite des Stetigventils herrscht.

Bevorzugt ist vorgesehen, dass das Ventilelement in der ersten Stellung einen minimalen, aber nicht verschwindenden Öffnungsquerschnitt des primären Steuerdurchlasses freigibt, so dass in der ersten Stellung des Ventilelements auf beiden Seiten des Stetigventils im Wesentlichen der gleiche Druck herrscht. Wird dann über das Kippventil Hydraulikflüssigkeit in dem Steuer-Volumenstrom von der zweiten Seite des Stetigventils zu der Hydrauliksenke abgelassen, so senkt dies den Druck auf der zweiten Seite des Stetigventils ab, so dass das Ventilelement aufgrund der auf das Ventilelement insgesamt wirkenden Kräfte sich von der ersten Stellung in Richtung zur zweiten Stellung bewegt, bis die Gleichgewichts- oder Regelposition eingenommen ist. Die Gleichgewichts- oder Regelposition ist stetig veränderbar durch stetige Vergrößerung oder Verkleinerung des Steuer-Volumenstroms mittels dem Kippventil.

Zur Steuerung bzw. Regelung des Ablass-Volumenstroms vermittels des Ventilelements wird vorgeschlagen, dass dieses dafür ausgeführt ist, bei einer Bewegung aus der ersten Stellung in Richtung zur zweiten Stellung wenigstens einen sekundären Steuerdurchlass aufzusteuern, über den der Ablass-Volumenstrom unter Umgehung des Kippventils zu der Hydrauliksenke für den Senkbetrieb ablassbar ist. Bezugnehmend auf die angesprochene Realisierung mit der sich einstellenden Gleichgewichts- oder Regelposition des Ventilelements wird jede einnehmbare Gleichgewichts- oder Regelposition einem bestimmten wirksamen Öffnungsquerschnitt des sekundären Steuerdurchlasses entsprechen, so dass der Ablass-Volumenstrom von dem über das Kippventil zu der Hydrauliksenke abgelassenen Steuer-Volumenstrom abhängt und damit mittels des Kippventils, durch Steuerung oder Regelung des Steuer-Volumenstroms, steuerbar bzw. regelbar ist.

In der Regel wird man vorsehen, dass der sekundäre Steuerdurchlass in der ersten Stellung des Ventilelements geschlossen ist, insbesondere für den Haltebetrieb.

In der Regel wird man vorsehen, dass der Ablass-Volumenstrom monoton, vorzugsweise streng monoton, mit dem Steuer-Volumenstrom ansteigt.

Gemäß einer in der Regel durchaus zweckmäßigen Ausgestaltung des Hydrauliksystems kann man vorsehen, dass der Ablass-Volumenstrom bezogen auf eine die Abhängigkeit des Ablass-Volumenstroms von dem Steuer-Volumenstrom angebende Kennlinie zumindest bereichsweise linear mit dem Steuer-Volumenstrom ansteigt. Der Ablass-Volumenstrom ist dann proportional zu dem Steuer-Volumenstrom.

Eine andere Möglichkeit ist, dass der Ablass-Volumenstrom bezogen auf eine/die die Abhängigkeit des Ablass-Volumenstroms von dem Steuer-Volumenstrom angebende Kennlinie zumindest bereichsweise degressiv mit dem Steuer-Volumenstrom ansteigt. So lassen sich für kleine Steuer-Volumenströme vergleichsweise große Ablass-Volumenströme erreichen und ein Feinsteuerbereich, in dem der Ablass-Volumenstrom weniger empfindlich auf Änderungen der Steuer-Volumenstroms reagiert, ist dann erst für vergleichsweise große Steuer-Volumenströme, beispielsweise etwa erst im letzten Drittel des Verstellwegs des angesprochenen Ventilelements von der ersten Stellung zur zweiten Stellung, wirksam.

Gegenüber den angesprochenen Varianten mit dem linearen Steuerverhalten und dem degressiven Steuerverhalten wird in einem erfindungsgemäßen hydraulischen System in der Regel ein progressives Steuerverhalten zu bevorzugen sein. Hierzu wird vorgeschlagen, dass der Ablass-Volumenstrom bezogen auf eine/die die Abhängigkeit des Ablass-Volumenstroms von dem Steuer-Volumenstrom angebende Kennlinie zumindest bereichsweise progressiv mit dem Steuer-Volumenstrom ansteigt. Man kann hierdurch speziell vorsehen, dass eine der Kipp-Anwendung besser entsprechende Spreizung des Steuer/Regel-Bereichs erreicht wird, für ein verbessertes Feinsteuerverhalten bei kleineren Steuer-Volumenströmen. Erst für große Steuer-Volumenströme können dann auch große Ablass-Volumenströme erreicht werden. Beispielsweise kann ein verbessertes Feinsteuerverhalten im ersten Drittel des Stellwegs des angesprochenen Ventilelements von der ersten Stellung zu der zweiten Stellung vorgesehen werden.

Allgemein wird vorgeschlagen, dass die Ventilanordnung wenigstens eine hydraulische 3-Wege-Weiche bildet. Ferner wird allgemein daran gedacht, dass die Ventilanordnung wenigstens ein Stetigventil umfasst, welches vorzugsweise als 2-Wege-Sitzventil (insbesondere 2/2-Wege-Sitzventil) oder/und als Valvistor ausgeführt ist. Ein solcher Valvistor kann wenigstens ein zwischen einer ersten Stellung und einer zweiten Stellung verstellbares Ventilelement umfassen, welches dafür ausgeführt ist, wenigstens einen primären Steuerdurchlass und wenigstens einen sekundären Steuerdurchlass aufzusteuern, wie schon angesprochen. Das Ventilelement kann durch eine Federanordnung in Richtung der ersten Stellung vorgespannt sein, oder aufgrund von unterschiedlichen Druckangriffsflächen des Ventilelements bezogen auf eine erste Seite und eine zweite Seite des Ventilelements durch die Hydraulikflüssigkeit in Richtung einer Einnahme der ersten Stellung beaufschlagbar sein. Es kann sich um einen Valvistor handeln, wie beispielsweise von der Firma EATON Corporation als "Vickers HFV (Hydraulic Feedback Valvistor)" angeboten, der ohne Federvorspannung für das als "poppet" bezeichnete Ventilelement auskommt. Ein solches Valvistor-Sitzventil wurde erstmals in einer Dissertation von Bo. R. Andersson "On the Valvistor, a proportionally controlled feed valve" (PhD-thesis, LiTH, 1984, ISBN 91-7372-748-2) beschrieben. Informationen zum Valvistor-Sitzventil und Weiterentwicklungen davon finden sich in einem Aufsatz der Autoren Björn Eriksson, Jonas Larsson, Jan-Ove Palmberg "A Novel Valve Concept Including the Valvistor Poppet Valve" in Ventil 14 / 2008/ 5, Seiten 438 bis 442. Ein Valvistor, bei dem das Ventilelement federvorgespannt ist, ist in der DE 101 241 54 B4 mit dem Titel "Stromregelventil" detailliert beschrieben.

Bekannte Ausführungen eines solchen proportional steuerbaren, als Valvistor bezeichenbaren 2/2-Wege-Ventils verfügen, wie mit dem durch das angesprochene Ventilelement aufsteuerbaren primären Steuerdurchlass angesprochen, über eine linear über den Hub veränderliche Schubblende. Eine solche Schubblende ist herkömmlich beispielsweise als rechteckiges Fenster mit einer Breite w und einer über den Hub des Ventilkolbens veränderlichen Höhe h ausgebildet, so dass aus einer linearen Durchfluss-Querschnittsveränderung am steuernden Ventil, in der vorliegenden Anwendung das Kippventil, eine lineare Durchlass-Querschnittsveränderung an der Schubblende und somit am Öffnungsquerschnitt der sogenannten Hauptstufe folgt. Der durch das steuernde Ventil eingeprägte Öffnungsquerschnitt entspricht also dem der Schubblende, welcher wiederum in einem konstanten Verhältnis zum Öffnungsquerschnitt der Hauptstufe steht, woraus sich das angesprochene lineare Steuerverhalten ergibt. Ein solches lineares Übertragungsverhalten wird in der Praxis in der Regel zu einem ungeeigneten "Feinsteuerverhalten" zum Senken einer Kippbrücke führen.

Demgegenüber ist es bevorzugt, ein progressives Steuerverhalten vorzusehen. Dies wird dadurch erreicht, dass der wiederum dem durch das Steuerventil eingeprägten Öffnungsquerschnitt entsprechende Öffnungsquerschnitt der Schubblende in einem progressiv zunehmenden Verhältnis zum Öffnungsquerschnitt der Hauptstufe steht, so dass für einen kleinen Steuer-Volumenstrom nur ein vergleichsweise kleiner Ablass-Volumenstrom resultiert, der dann überproportional, beispielsweise quadratisch, mit zunehmenden Steuer-Volumenstrom ansteigt. Das kann dadurch erreicht werden, dass die Schubblende eine über den Steuerweg (Hub) des Ventilelements veränderliche Breite aufweist. So kann durch eine sich sehr einfache Modifikation gegenüber herkömmlichen Valvistor-Ventilen eine der speziellen Kipper-Anwendung besser entsprechende Spreizung des Regelbereichs erreicht werden, beispielsweise für ein verbessertes Feinsteuerverhalten für das erste Drittel des Hubs des Ventilelements, also des Stellwegs aus der ersten Stellung in die zweite Stellung.

Wie ebenfalls schon erwähnt, kann für mache Anwendungen ein degressives Steuerverhalten gewünscht sein, was beispielsweise durch Umkehrung der Schubblendengeometrie gegenüber dem progressiven Steuerverhalten erreicht werden kann, so dass der Feinsteuerbereich beispielsweise erst im letzten Drittel des Hubs des Ventilelements wirksam ist.

Zu den vorstehend angesprochenen und erläuterten Weiterbildungsvorschlägen, also dem hydraulischen System mit der zumindest mit dem Hydrauliksystem, dem Kippventil und der Hydrauliksenke in Hydraulikverbindung stehenden Ventilanordnung, wird ebenfalls die Ausführung der Saugpumpe als Strahlpumpe favorisiert, über die der Rückführ-Volumenstrom als Treibmittelstrom für den Saugbetrieb der Strahlpumpe der Hydrauliksenke zuführbar ist. Diesbezüglich wird speziell vorgeschlagen, dass eine Saugseite der Strahlpumpe derart an der Ventilanordnung angeschlossen ist, so dass der Ablass-Volumenstrom unter Umgehung des Kippventils für den Senkbetrieb des Hydraulikzylinders über die Strahlpumpe zu der Hydrauliksenke ablassbar ist. Es kann so also auf sehr einfache, kostengünstige und betriebssichere Weise der wirksame Staudruck aufgrund des Abfließens der Hydraulikflüssigkeit aus dem Hydraulikzylinder reduziert und damit die Abfließgeschwindigkeit vergrößert werden, im Vergleich zu einer Lösung ohne die Saugpumpe bzw. Strahlpumpe.

Die Erfindung wird im Folgendem anhand von in den Figuren veranschaulichten Ausführungsbeispielen näher erläutert.
- Figur 1: ist ein vereinfachtes Prinzipschaltbild einer ersten Ausführungsform eines erfindungsgemäßen Hydrauliksystems mit einer das Absenken der Kippbrücke unterstützenden Saugpumpe in Form einer Strahlpumpe.
- Figur 2: zeigt eine durch ein Kippventil des Hydrauliksystem ansteuerbare Ventilanordnung des Hydrauliksystems, die eine ein Valvistor-Ventil umfassende, stetig (z.B. proportional) steuerbare 3-Wege-Weiche für die Rücklaufsteuerung des Hydraulikzylinders des Hydrauliksystems bildet.
- Figur 3: zeigt ein Schaltbild einer zweiten Ausführungsform eines erfindungsgemäßen Hydrauliksystems mit einer Bypass-Leitung für das Absenken der Kippbrücke und einer das Absenken der Kippbrücke unterstützenden Saugpumpe in Form einer Strahlpumpe.

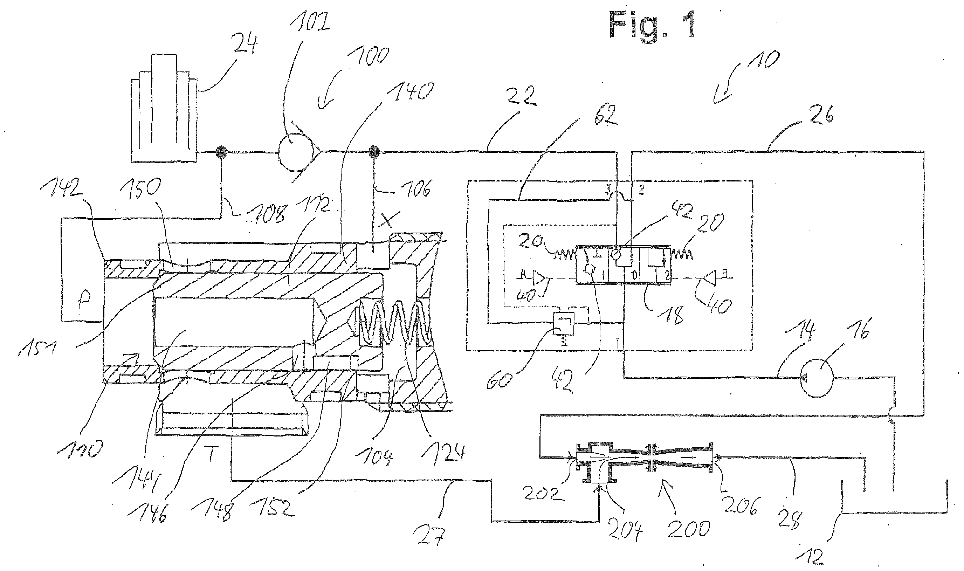

Das in der Prinzipdarstellung der Figur 1 dargestellte Hydrauliksystem 10 umfasst ein Hydrauliksenke in Form eines Vorratsbehälters 12 für eine Hydraulikflüssigkeit, insbesondere ein Hydrauliköl. Von diesem Behälter 12 geht eine Speiseleitung 14 ab, welches mittels einer als Hydraulikquelle dienenden Pumpe 16 das Hydrauliksystem mit Hydrauliköl versorgt. Die Speiseleitung 14 steht in Verbindung mit einem Kippventil 18, das in drei Stellungen 0, 1 und 2 einstellbar ist. Das Kippventil 18 ist durch angedeutete Federn 20 in die Stellung 0 (Neutralstellung) vorgespannt, die auch als Haltestellung dient.

Vom Kippventil 18 erstreckt sich eine weitere Zuführleitung 22 über eine noch detailliert zu beschreibende Ventilanordnung 100 zu einem hier als Teleskopzylinder ausgebildeten, einfach wirkenden Hydraulikzylinder 24, welcher als Antriebsaggregat einer nicht dargestellten Kippbrücke dient. Ferner verläuft zwischen dem Kippventil 18 und dem Tank 12 eine Rückführleitung 26, über welche Hydrauliköl vom Kippventil 18 in den Tank zurückfließen kann, über eine noch näher zu erläuternde, als Strahlpumpe ausgeführte Saugpumpe 200.

Eine weitere Rückführleitung 27 führt von der Ventilanordnung 100 über die Saugpumpe 200 in den Tank 12. In Abhängigkeit von Betriebszuständen der Ventilanordnung 100 ist Hydrauliköl vom Hydraulikzylinder 24 über die Rückführleitung 27 und die Saugpumpe 200 in den Tank ablassbar.

Wenn der Hydraulikzylinder 24 von seiner in Figur 1 angedeuteten Fahrbetriebsstellung in die Kippbetriebsstellung ausgefahren bzw. die Kippbrücke angehoben werden soll, wird das Kippventil 18 beispielsweise über einen Joystick-artigen Geber, der das Kippventil pneumatisch oder elektrisch ansteuert (bei 40), in die Stellung 1 gebracht, in der die Pumpe 16 Hydrauliköl über die Leitungen 14 und 22 und ein Rückschlagventil 102 der Ventilanordnung 100 dem Hydraulikzylinder 24 zuführt. Ein dem Kippventil 18 zugehöriges Rückschlagventil 42 verhindert in der Stellung 1 (Kippen), dass Hydrauliköl aus der Leitung 22 in Richtung zur Pumpe 16 zurückfließt, so dass der zum Anheben der Kippbrücke erforderliche Druck in der Leitung 22 aufgebaut werden kann.

Wenn die Kippbrücke wieder abgesenkt werden soll, wird das Kippventil 18 beispielsweise mittels des angesprochenen Gebers in die Stellung 2 (Senken) gebracht. Diese ermöglicht einen Abfluss von Hydrauliköl aus einem Steuerbereich 104 der Ventilanordnung 100, welche hierzu einen über eine Leitung 106 an der Leitung 22 angeschlossenen Steueranschluss X aufweist. Die Ventilanordnung 100 ist dafür ausgelegt, dass dieser Abfluss von Hydrauliköl über den Steueranschluss X einen Ablass-Volumenstrom an Hydrauliköl von dem Hydraulikzylinder 24 durch die Ventilanordnung und dann über die Rückführleitung 27 und die Saugpumpe 200 in den Tank 12 zur Folge hat. Der Hydraulikzylinder 24 ist hierzu an einen Eingangsanschluss P der Ventilanordnung angeschlossen und die Rückführleitung 27 ist an einem Ausgangsanschluss T der Ventilanordnung 100 angeschlossen. Der Ablass-Volumenstrom über den Ausgangsanschluss T, die Rückführleitung 27 und die Saugpumpe 200 in den Tank 12 ist abhängig von einem Steuer-Volumenstrom aus dem Steuerbereich 104 über den Steueranschluss X, die Leitungen 106 und 102, das Kippventil 18 in dessen Stellung 2 und die Rückführleitung 26 in den Tank 12.

Bei abgesenkter Kippbrücke, also bei der Fahrbetriebsstellung des Hydraulikzylinders 24, wird das Kippventil 18 beispielsweise mittels des angesprochenen Gebers in die Neutralstellung 0 gebracht.

Zum grundsätzlichen Aufbau ist noch zu erwähnen, dass das Hydrauliksystem eine Überdruckentlastungseinrichtung 60 aufweist, über die bei vollständig ausgefahrenem Hydraulikzylinder Hydrauliköl über eine Überdruckausgleichsleitung 62 zur Leitung 26 und damit - auf noch zu beschreibende Weise über die Saugpumpe 200 - zum Tank 12 hin abgeführt wird, wobei der zum Anheben der Kippbrücke erforderliche Druck in der Hydraulikleitung 22 durch das Rückschlagventil 42 im Kippventil 18 gehalten wird. Somit besteht bei in Stellung 1 gehaltenem Kippventil keine Gefahr einer Beschädigung des Hydrauliksystems trotz vollständig ausgefahrenem Hydraulikzylinder und weiter Hydrauliköl fördernder Pumpe.

Das Hydrauliksystem ist derart betreibbar, dass die Pumpe 16 der Hydraulikquelle kontinuierlich läuft, unabhängig von der momentanen Stellung des Kippventils 18. Regelmäßig kann eine solche Pumpe durch den Motor eines das hydraulische System mit der Kippbrücke aufweisenden Kipperfahrzeugs kontinuierlich angetrieben werden, auch wenn das Kippventil die Stellung 1 einnimmt und der Hydraulikzylinder vollständig ausgefahren ist, wenn das Kippventil die Stellung 2 einnimmt oder wenn das Kippventil die Stellung 0 einnimmt. Das dem Kippventil 18 zugeführte Hydrauliköl wird dann über die Leitung 26 abgeführt, so dass ein kontinuierlicher Ölkreislauf besteht. Dieser Ölkreislauf vom Hydraulikreservoir 12 über die Pumpe 16, das Kippventil 18, die Rückführleitung 26 hin zur Saugpumpe 200 und dann zurück in den Tank 12 wird nach der dargestellten Ausführungsform zum Antrieb der als Strahlpumpe ausgeführten Saugpumpe verwendet. Die Rücklaufleitung 26 führt also zu einem Treibmittelanschluss 202 der Strahlpumpe 200, und die Rückführleitung 27 führt zur Unterstützung des Absenkens durch die Strahlpumpe 200 zu einem Sauganschluss 204 der Strahlpumpe 200, deren Abgabeanschluss 206 über eine weitere Rückführleitung 28 zum Hydraulikreservoir 12 führen kann. Alternativ und bevorzugt ist die Strahlpumpe 200 allerdings in die Hydrauliksenke, genauer den Tank 12, integriert, so dass der Tank 12 neben einem Ansauganschluss für den Anschluss der Pumpe 16 den Treibmittelanschluß 202 und den Sauganschluss 204 aufweist.

Durch die Strahlpumpe 200 wird der aus dem Abfließen von Hydrauliköl aus dem Hydraulikzylinder 24 über die Leitung 27 resultierende und die Abfließgeschwindigkeit begrenzende wirksame Staudruck reduziert, da die Stahlpumpe "aktiv" Hydrauliköl über die Leitung 27 ansaugt. Dieser Ansaugeffekt lässt sich in gewissem Maße in seiner Stärke variieren, durch Vergrößerung und Verkleinerung des über die Leitung 26 der Strahlpumpe 200 zugeführten Hydraulikölstroms, der der Treibmittelstrom für die Strahlpumpe 200 ist. Es kann somit über die Motordrehzahl und damit die Pumpendrehzahl der "Treiböl-Volumenstrom" und somit die "Saugwirkung" der Strahlpumpe 200 reguliert werden, mit entsprechender Beeinflussung der Absenkgeschwindigkeit der Kippbrücke im Senkbetrieb.

Zu diesem erfindungsgemäß zu erreichenden Effekt der Unterstützung des Abflusses aus dem Hydraulikzylinder durch die Saugpumpe 200 kommen vorteilhafte Eigenschaften der Ventilanordnung 100 betreffend das Ablassen von Hydrauliköl aus dem Hydraulikzylinder. Die angesprochene Funktion der Ventilanordnung 100 betreffend das Ablassen von Hydrauliköl aus dem Hydraulikzylinder, welches unter der den Hydraulikzylinder in Einfuhrrichtung wirkenden Gewichtsbeaufschlagung durch die Kippbrücke erfolgt, wird durch einen sogenannten Valvistor 110 der Ventilanordnung 100 erreicht, als dessen Pilotventil das Kippventil 18 dient. Die sogenannte Hauptstufe (im Folgenden ebenfalls mit dem Bezugszeichen 110 angesprochen) des Valvistors weist ein Ventilelement in Form eines als Sitzschieber ausgeführten Kolbens 112 auf.

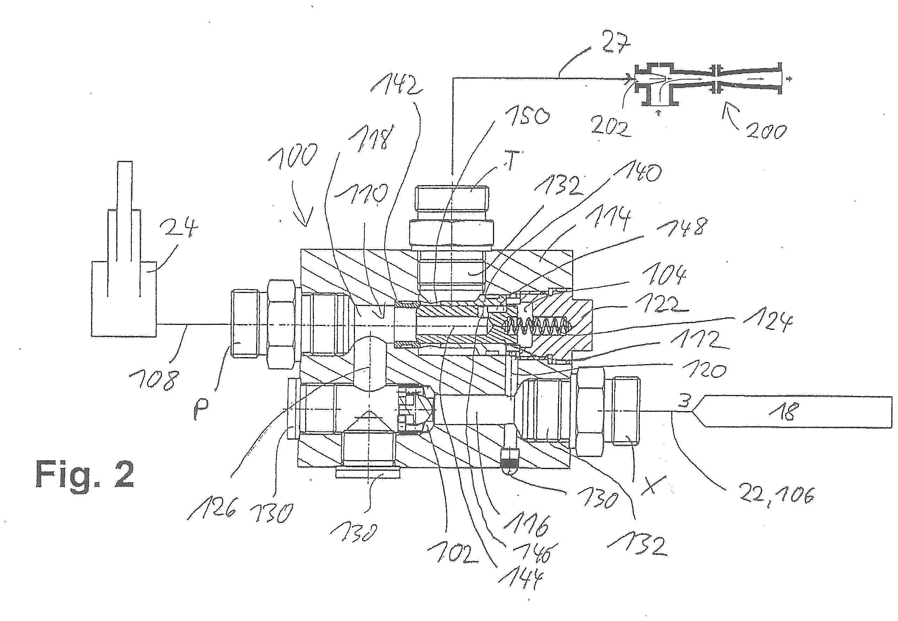

Bevorzugt ist die Ventilanordnung 100 mit dem Rückschlagventil 102 und der Hauptstufe 110 des Valvistors als integrale Ventileinheit mit einem gemeinsamen Ventilgehäuse ausgeführt, wofür in Figur 2 ein Ausführungsbeispiel gegeben ist. Das gemeinsame Ventilgehäuse 114 ist von zwei sich vorzugsweise parallel zueinander erstreckende Ventilbohrungen 116 und 118 durchsetzt. Die Ventilbohrung 116 mündet in dem Steueranschluss X und enthält das Rückschlagventil 102. Zwischen dem Steueranschluss X und dem Rückschlagventil 102 ist die Ventilbohrung 118 mittels einer sich in radialer Richtung ausgeführten Verbindungsbohrung 120 mit einem in der Ventilbohrung 118 zwischen dem Kolben 112 und einem die Ventilbohrung verschließenden Verschluss 122 ausgebildeten Steuerbereich 104 verbunden, der im Falle des Ausführungsbeispiels auch als Federraum 104 für eine den Kolben 112 vorspannende Regelfeder 124 angesprochen werden kann.

Die Ventilbohrung 118 mündet axial in dem Eingangsanschluss P und ist über eine vorzugsweise zur Verbindungsbohrung 120 parallele radiale Verbindungsbohrung 126 verbunden, und zwar einerseits zwischen dem Eingangsanschluss P und dem Kolben 112 und andererseits auf der Abflussseite des Rückschlagventils 102, also auf dessen zum Eingangsanschluss X entgegengesetzten Seite. Die Verbindungsbohrung 126 hat einen deutlich größeren Durchlass-Öffnungsquerschnitt als die Verbindungsbohrung 112, in ähnlicher Größenordnung wie die Ventilbohrungen 116 und 118. Verschlusselemente zum Verschließen der Ventilbohrung 116 am zum Steueranschluss X entgegengesetzten Ende und der beiden Verbindungsbohrungen sind mit 130 bezeichnet.

In einem mittleren Bereich ist die Ventilbohrung 118 über eine in der Ventilbohrung 118 mündende Radialbohrung 132 mit dem Ausgangsanschluss T verbunden, richtiger verbindbar, wie noch zu erläutern ist.

Die Verbindungsbohrung 120 und der zum Steueranschluss X führende Abschnitt der Ventilbohrung 116 bilden einen Steuerkanal 132, der den Steuerbereich 104 bzw. den Federraum 104 mit dem Steueranschluss X verbindet.

Die Ventilbohrung 118 erweitert sich stufenförmig in Richtung zum Verschlusselement 122 hin. Im Bereich der Radialbohrung 132 ist eine Kolbenführung 140 mit einem Ventilsitz 142 ausgebildet, gegen den der als Sitzschieber ausgeführte Kolben 112 durch die sich am Verschluss 122 abstützende Regelfeder 124 vorgespannt ist. Beim Ausführungsbeispiel handelt es sich bei der Kolbenführung 140 und den Ventilsitz 142 um gegenüber dem Gehäuse 114 gesonderte Elemente, die in die Ventilbohrung 118 aufgenommen sind.

Im Kolben 122 ist eine Axialbohrung 144 ausgebildet, die über eine Radialbohrung 146 mit einem Steuerschlitz 148 des Kolbens verbunden ist. In dem von dem Steuerschlitz 148 entfernten, dem Ventilsitz 142 benachbarten Endbereich der Ventilführung 140 sind Radialdurchbrüche 150 ausgebildet, über die bei vom Ventilsitz 142 abgehobenem Kolben 112 der Eingangsanschluss P mit dem Ausgangsanschluss T verbunden ist. Sitzt der Kolben 112 auf dem Ventilsitz 142 auf, ist diese Verbindung zwischen den Anschlüssen P und T unterbrochen.

Die Radialdurchbrüche 150 dienen als Aufsteueröffnungen, die bei einer Bewegung des Kolbens 112 von einer ersten Position im Eingriff mit dem Ventilsitz 142 durch eine Steuerkante des Kolbens an dessen zur Regelfeder 124 entgegengesetzten Ende aufgesteuert werden, also wenn der Kolben 112 sich in der Darstellung der Figur 2 nach rechts bewegt.

Der zum Ventilsitz 118 entgegengesetzte Endbereich der Ventilführung 140 der im Axialbereich des Steuerschlitzes 148 liegt, bildet eine Steuerkante 152, die zusammen mit Steuerschlitz 148 einen aufsteuerbaren primären Steuerdurchlass bildet, über den der Steuerbereich 104 über die Bohrungen 146 und 144 im Kolben 112 mit dem am Eingangsanschluss P angeschlossenen Abschnitte der Ventilbohrung 18 verbindbar, genauer mit aufsteuerbaren Öffnungsquerschnitt verbunden ist. In der in Figur 2 und entsprechend in Figur 1 vergrößert dargestellten Grundposition für den Kolben 112 (also in der im Eingriff mit dem Ventilsitz 142 befindlichen "ersten Stellung"), gibt die dem Steuerschlitz 148 zugeordnete Steuerkante 152 (vgl. Figur 1) bereits einen sehr geringen Öffnungsquerschnitt für den Steuerschlitz 148 frei, so dass der Druck in dem die Regelfeder 124 aufnehmenden Federraum 104 im Wesentlichen dem Druck am Eingangsanschluss P entspricht. In dieser Grundposition ist das an dem Steueranschluss X angeschlossene Kippventil geschlossen (Stellung 0) oder in der den Druck von der Pumpe durchlassenden Stellung 1.

Zum Aufsteuern des Valvistors 110 wird das Kippventil in der Stellung 2 aufgesteuert, so dass Hydrauliköl als Steueröl aus dem Federraum 104 über den Steueranschluss X, die Leitungen 106 und 22, das in Abflussrichtung aufgesteuerte Kippventil 18 und die Rücklaufleitung 26 in den Tank 12 abfließen kann. Der den Kolben 112 in Schließrichtung beaufschlagende Druck im Federraum 104 wird hierdurch abgesenkt, so dass der Kolben 112 vom Ventilsitz 142 abhebt und damit die Aufsteueröffnungen 150 durch dass sich in den Figuren nach rechts bewegende, der Steuerfeder 124 entgegengesetzte Kolbenende 151 aufgesteuert werden, wodurch die Verbindung vom Eingangsanschluss P zum Ausgangsanschluss T aufgesteuert wird. Dieses Kolbenende 151 bildet mit den Aufsteueröffnungen 150 aufsteuerbare sekundäre Steuerdurchlässe.

Durch die angesprochene Axialverschiebung des Kolbens 112 steuert die Steuerkante 152 des weiteren auch den Öffnungsquerschnitt am Steuerschlitz 148 auf, so dass Steueröl über die Kolbenbohrungen 144 und 146 und den Steuerschlitz 148 in den Federraum 104 eintreten kann. In Abhängigkeit von der Öffnung des Kippventils 18 in der Stellung 2, vom Druck am Eingangsanschluss P und von der Kraft der Regelfeder 124 wird der Kolben in eine Gleichgewichts- oder Regelposition gebracht, in der die Steuerölströmung durch den an der Steuerkante 152 durch den Steuerschlitz 148 aufgesteuerten Querschnitt des primären Steuerdurchlasses gleich der Steuerölströmung aus dem Federraum 112 durch das Kippventil 4 in dessen Stellung 2 ist, so dass bezogen auf den Federraum 104 die Summe der zulaufenden und ablaufenden Steuerölvolumenströme konstant ist.

Es wird so eine Funktion ähnlich wie bei einem Transistor, nur bezogen auf Hydraulikflüssigkeitsströme, erreicht. Der Ablass-Volumenstrom aus dem Hydraulikzylinder 24 über die Leitung 108, den Eingangsanschluss P und den Ausgangsanschluss T sowie die Rücklaufleitung 27 und die Strahlpumpe 200 in den Tank 12 ist stetig abhängig von dem durch das Kippventil 18 in dessen Stellung 2 eingestellten Steuer-Volumenstrom aus der Federkammer 104 über den Steueranschluss X, die Leitungen 106 und 122, das Kippventil 18 und die Rücklaufleitung 26 in den Tank 12. Dabei kann der maximale Durchlassquerschnitt der Durchlassöffnungen 150 und damit der maximale Ablass-Volumenstrom zum Senken der Kippbrücke über die Anschlüsse P und T wesentlich größer sein, als der maximale Steuer-Volumenstrom durch das Kippventil 18 in dessen Stellung 2. Es werden so die Vorteile herkömmlich alternativer, in verschiedene Richtung gehender Lösungen kombiniert. Einerseits kann die Kippbrücke viel schneller abgesenkt werden als wenn der Ablass-Volumenstrom durch das Kippventil 18 fließen müsste und damit durch dieses begrenzt wäre. Andererseits wird eine stetige, beispielsweise proportionale Steuerbarkeit des Ablass-Volumenstroms beibehalten, und das Hydrauliksystem ist kompatibel mit herkömmlichen Hydrauliksystemen, da einfach nur die erfindungsgemäße Ventilanordnung, beispielsweise in Form einer integralen Ventileinheit etwa entsprechend Figur 2, zwischen den Hydraulikzylinder 24 und das Kippventil 18 geschaltet werden muss, unter zusätzlicher Bereitstellung der Abfließmöglichkeit des Hydrauliköls aus dem Ausgangsanschluss T über die erfindungsgemäße Saugpumpe zu einer Hydrauliksenke, beispielsweise dem Tank 12.

In einer etwas anderen Terminologie kann man auch davon sprechen, dass der Kolben 112 mit dem Steuerschlitz 148 und der Steuerkante 152 eine Schubblende bildet, welche in Abhängigkeit des aus dem Kippventil 18 resultierenden Senksignals am Anschluss 3 für den Hydraulikzylinder stetig öffnet, beispielsweise proportional, und so über die Hauptstufe des Valvistors Hydrauliköl aus dem Hydraulikzylinder über die Anschlüsse P und T zur Hydrauliksenke ausströmen lässt. Bei dem diese Schubblende aufweisende Valvistor handelt es sich im Prinzip um ein 2/2-Wege-Sitzventil, welches bei der erfindungsgemäßen Anwendung über das als sogenanntes Pilotventil dienende Kippventil ansteuerbar ist. Insgesamt ist durch dieses 2/2-WegeVentil und das Rückschlagventil eine hydraulische 3-Wege-Weiche gebildet, die anstelle einer herkömmlichen 3-Wege-Weiche ohne stetige Steuerbarkeit des Ablass-Volumenstroms einsetzbar ist.

Führt man diese erfindungsgemäße 3-Wege-Weiche mit einem herkömmlichen Valvistor aus, so weist diese eine konstante Kreisverstärkung und damit eine konstante Abhängigkeit zwischen dem Steuer-Volumenstrom, welcher über den Anschluss 3 des Kippventils abgeführt wird, und dem Ablass-Volumenstrom, welcher unter Umgehung des Kippventils direkt zu der Hydrauliksenke abgeführt wird, auf.

Weitere Erläuterungen zu dem Valvistor und Angaben zu bevorzugten Ausgestaltungen finden sich in der am 11.02.2014 eingereichten deutschen Patentanmeldung 10 2014 202 436.6 sowie in der korrespondierenden, am 06.02.2015 eingereichten europäischen Patentanmeldung 15 154 062.2 der gleichen Anmelderin. Der Offenbarungsgehalt dieser Anmeldungsunterlagen vom 11.02.2014 bzw. vom 06.02.2015 wird durch Bezugnahme vollständig in die Offenbarung der vorliegenden Anmeldung einbezogen.

Aus diesen Anmeldungsunterlagen der älteren Anmeldung ergeben sich insbesondere Ausführungsvarianten, bei denen durch Ausgestaltung einer Schubblende verschiedenartige Abhängigkeiten des Ablass-Volumenstroms vom Steuer-Volumenstrom erreicht werden, neben einem linearen Zusammenhang, also einer Proportionalität zwischen dem Ablass-Volumenstrom und dem Steuer-Volumenstrom, auch eine progressive oder degressive Zunahme des Ablass-Volumenstroms bei ansteigendem Steuer-Volumenstrom. Dies kann durch eine entsprechende Ausführung eines Durchlassfensters der Schubblende erreicht werden, wie in der angesprochenen älteren Anmeldung anhand von Beispielen erläutert.

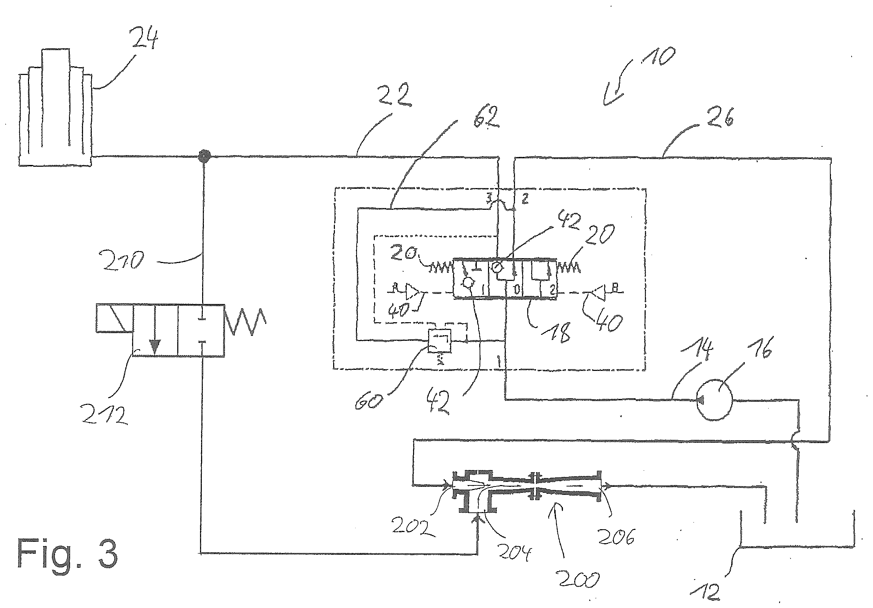

Die durch die erfindungsgemäße Saugpumpe, vorzugsweise Strahlpumpe, erreichten Vorteile hinsichtlich einer Vergrößerung der Absenkgeschwindigkeit der Kippbrücke lassen sich auch im Zusammenhang mit andersartigen Hydrauliksystemen erreichen. Ein Beispiel hierfür ist in Figur 3 gezeigt. Von der das Kippventil 18 mit dem Hydraulik-Zylinder 24 verbindenden Leitung 22 zweigt eine Bypass-Leitung 210 ab, die über ein als 2/2-Wege-Sitzventil 212 zum Sauganschluss 204 der Strahlpumpe 200 führt. Das Bypass-Ventil ist vorzugsweise als elektrisch ansteuerbares Ventil ausgeführt und wird aus dem Sperrzustand in den Abfluss über die Leitung 210 ermöglichenden Durchlasszustand gebracht, wenn die Kippbrücke abzusenken ist. Es kann dann aus dem Hydraulikzylinder abfließendes Öl einerseits über die Bypass-Leitung 210 und die Strahlpumpe 200 in den Hydraulikbehälter 12 abgeführt werden, sowie andererseits ggf. auch in einem gewissen Ausmaß über die Rücklauf-Leitung 26 in Stellung 2 des Kippventils. Der Abfluss von Hydrauliköl über die Bypass-Leitung 210 wird dabei durch die Strahlpumpe 200 unterstützt, die den wirksamen Staudruck reduziert.

Alternativ könnte die das Kippventil 18 umgehende Leitung 210 auch an einen zweiten Abschlussanschluss des Hydraulikzylinders 24 angeschlossen sein. Bei beiden Varianten kann über die Steuerung des Treibmittelstroms der Strahlpumpe 200 mittels der Pumpe 16 die Abflussgeschwindigkeit über die Leitung 210 und damit die Senkgeschwindigkeit der Kippbrücke in einem gewissen Ausmaß beeinflusst, also gesteuert werden.

Auf Basis der vorhergehenden Offenbarung erschließen sich dem Fachmann diverse alternative Ausgestaltungsmöglichkeiten, die von der in den anhängenden Ansprüchen definierten technischen Lehre Gebrauch machen.

## Patentansprüche

1. Hydraulisches System zum Kippen wenigstens einer auf einem Kipperfahrzeug befindlichen Kippbrücke, umfassend:
- wenigstens einen Hydraulikzylinder (24) als Kippantriebsaggregat für die Kippbrücke,
- wenigstens ein Kippventil (18) zur Steuerung zumindest eines Hubbetriebs und eines Haltebetriebs des Hydraulikzylinders,
- wenigstens eine Hydrauliksenke (12) und wenigstens eine Hydraulikquelle (16), sowie
- wenigstens ein zumindest mit dem Hydraulikzylinder (24) und der Hydrauliksenke (12) in Hydraulikverbindung stehendes Ventil (110; 212), über welches aus dem Hydraulikzylinder (24) Hydraulikflüssigkeit in einem Ablass-Volumenstrom unter Umgehung des Kippventils (18) zu der Hydrauliksenke (12) für einen Senkbetrieb des Hydraulikzylinders ablassbar ist;
**gekennzeichnet durch** eine das Ablassen der Hydraulikflüssigkeit in dem Ablass-Volumenstrom unter Umgehung des Kippventils (18) unterstützende Saugpumpe (200), über die zumindest ein Teilvolumenstrom des Ablass-Volumenstroms der Hydrauliksenke (12) zuführbar ist.

2. Hydraulisches System nach Anspruch 1,
**dadurch gekennzeichnet, dass** im Haltebetrieb und im Senkbetrieb auf Basis eines momentanen Abgabevolumenstroms der Hydraulikquelle (16) vermittels des Kippventils (18) Hydraulikflüssigkeit in einem Rückführ-Volumenstrom zu der Hydrauliksenke (12) rückführbar ist.

3. Hydraulisches System nach Anspruch 2,
**dadurch gekennzeichnet, dass** die Saugpumpe als Strahlpumpe (200) ausgeführt ist, über die der Rückführ-Volumenstrom als Treibmittelstrom für einen Saugbetrieb der Strahlpumpe der Hydrauliksenke (12) zuführbar ist.

4. Hydraulisches System nach Anspruch 3,
**dadurch gekennzeichnet, dass** eine Saugleistung der Strahlpumpe (200) in deren Saugbetrieb mittels eines eine Pumpe der Hydraulikquelle (16) antreibenden Motors steuerbar ist.

5. Hydraulisches System nach einem der Ansprüche 3 und 4, **dadurch gekennzeichnet, dass** die Strahlpumpe (200) als integraler Bestandteil eines Flüssigkeitsreservoirs der Hydrauliksenke (12), insbesondere einer hydraulischen Anschlussanordnung des Flüssigkeitsreservoirs, ausgeführt ist.

6. Hydraulisches System nach Anspruch 5,
**dadurch gekennzeichnet, dass** ein einer Saugseite zugeordneter Anschluss (204) der Strahlpumpe (200) einen Rücklauf-Anschluss des Flüssigkeitsreservoirs für einen Rücklauf von Hydraulikflüssigkeit von dem Hydraulikzylinder (24) unter Umgehung des Kippventils (18) bildet und ein Treibmittelanschluß (202) der Stahlpumpe einen Rücklauf-Anschluss des Flüssigkeitsreservoirs für einen Rücklauf von Hydraulikmedium vom dem Kippventil (18) bildet.

7. Hydraulisches System nach einem der Ansprüche 3 bis 6, **dadurch gekennzeichnet, dass** eine/die Saugseite der Strahlpumpe über das Ventil (212) an einem Ablass-Anschluss des Hydraulikzylinders (24) oder einem das Kippventil (18) mit dem Hydraulikzylinder verbindenden Abschnitt (22) des Hydrauliksystems angeschlossen oder anschließbar ist, so dass der Ablass-Volumenstrom unter Umgehung des Kippventils (18) für den Senkbetrieb des Hydraulikzylinders über die Strahlpumpe (200) zu der Hydrauliksenke (12) ablassbar ist.

8. Hydraulisches System nach einem der Ansprüche 1 bis 7,
**dadurch gekennzeichnet, dass** das Ventil (212) als vorzugsweise elektrisch ansteuerbares 2/2-Wegeventil ausgeführt ist.

9. Hydraulisches System nach einem der Ansprüche 1 bis 7,
**dadurch gekennzeichnet, dass** das Ventil (110) zu einer zumindest mit dem Hydraulikzylinder (24), dem Kippventil (18) und der Hydrau liksenke (12) in Hydraulikverbindung stehende Ventilanordnung (100) gehört, über welche in Abhängigkeit von Betriebszuständen zumin dest des Kippventils (18) auf Basis des/eines Abgabevolumenstroms der Hydraulikquelle (16) dem Hydraulikzylinder (24) Hydraulikflüssig keit in einem Zuführ-Volumenstrom für den Hubbetrieb zuführbar und aus dem Hydraulikzylinder (24) Hydraulikflüssigkeit in dem Ablass-Volumenstrom unter Umgehung des Kippventils (18) zu der Hydrau liksenke (12) für den Senkbetrieb ablassbar ist,
wobei die Ventilanordnung (100) und das Kippventil (18) vorzugsweise derart ausgeführt und miteinander hydraulisch verbunden sind, dass mittels des Kippventils (18) der Ablass-Volumenstrom stetig steuerbar oder regelbar ist.

10. Hydrauliksystem nach einem der Ansprüche 1 bis 9,
**dadurch gekennzeichnet, dass** der Ablass-Volumenstrom mittels des Kippventils (18) gemäß einer Ansteuerung des Kippventils oder/ und in Abhängigkeit von einem Volumenstrom an Hydraulikflüssigkeit durch das Kippventil (18) steuerbar oder regelbar ist.

11. Hydrauliksystem nach Anspruch 10,
**dadurch gekennzeichnet, dass** für die Herbeiführung des Senkbetriebs Hydraulikflüssigkeit in einem Steuer-Volumenstrom von der Ventilanordnung (100) über das Kippventil (18) zu der Hydrauliksenke (12) ablassbar ist und dass der resultierende Ablass-Volumenstrom stetig von dem Steuer-Volumenstrom abhängt, gewünschtenfalls linear oder progressiv oder degressiv mit diesem ansteigt.

12. Hydrauliksystem nach Anspruch 11,
**dadurch gekennzeichnet, dass** die Ventilanordnung wenigstens ein Stetigventil (110) mit wenigstens einem stetig zwischen einer im Hub betrieb und im Haltebetrieb eingenommenen ersten Stellung und ei ner im Senkbetrieb bei maximalem Ablass-Volumenstrom eingenom menen zweiten Stellung verstellbaren Ventilelement (112) umfasst, welches dafür ausgeführt ist, bei einer Bewegung aus der ersten Stel lung in Richtung zur zweiten Stellung wenigstens einen primären Steuerdurchlass (148, 152) aufzusteuern, über den Hydraulikflüssig keit von einer dem Hydraulikzylinder (24) zugeordneten ersten Seite des Stetigventils (110) zu einer dem Kippventil (18) zugeordneten zweiten Seite des Stetigventils (110) ablassbar ist, in Folge des Ab lassens des Steuer-Volumenstroms von der zweiten Seite des Stetig ventils (110) über das Kippventil (18) zu der Hydrauliksenke (12), wobei das Ventilelement (112) in der ersten Stellung vorzugsweise einen minimalen Öffnungsquerschnitt des primären Steuerdurchlasses (148, 152) freigibt.

13. Hydrauliksystem nach Anspruch 12,
**dadurch gekennzeichnet, dass** das Ventilelement (112) dafür aus geführt ist, bei einer Bewegung aus der ersten Stellung in Richtung zur zweiten Stellung wenigstens einen sekundären Steuerdurchlass (150, 151) aufzusteuern, über den der Ablass-Volumenstrom unter Umgehung des Kippventils (18) zu der Hydrauliksenke (12) für den Senkbetrieb ablassbar ist,
wobei der sekundäre Steuerdurchlass (150, 151) in der ersten Stellung des Ventilelements (112) vorzugsweise geschlossen ist.

14. Hydrauliksystem nach einem der Ansprüche 9 bis 13,
**dadurch gekennzeichnet, dass** die Ventilanordnung (100) wenigstens eine hydraulische 3-Wege-Weiche (100) bildet oder/und wenigstens ein vorzugsweise als 2-Wege-Sitzventil oder/und als Valvistor ausgeführtes Stetigventil (110) umfasst.

15. Hydrauliksystem nach einem der Ansprüche 9 bis 14,
**dadurch gekennzeichnet, dass** eine Saugseite der als Strahlpumpe (200) ausgeführten Saugpumpe derart an der Ventilanordnung (100) angeschlossen ist, dass der Ablass-Volumenstrom unter Umgehung des Kippventils (18) für den Senkbetrieb des Hydraulikzylinders über die Strahlpumpe (200) zu der Hydrauliksenke (12) ablassbar ist.

## Claims

1. Hydraulic system for tipping at least one tipping body located on a tipper lorry, comprising:
- at least one hydraulic cylinder (24) as a tipping drive unit for the tipping body,
- at least one tipping valve (18) for controlling at least one lifting operation and one holding operation of the hydraulic cylinder,
- at least one hydraulic sink (12) and at least one hydraulic source (16),
- and at least one valve (110; 212) which is hydraulically connected to at least the hydraulic cylinder (24) and the hydraulic sink (12) and by means of which hydraulic fluid can be discharged, in a discharge volume flow, from the hydraulic cylinder (24) to the hydraulic sink (12), bypassing the tipping valve (18), for a sinking operation of the hydraulic cylinder;
**characterised by** a suction pump (200) which supports the discharge of the hydraulic fluid in the discharge volume flow, bypassing the tipping valve (18), and by means of which at least a partial volume flow of the discharge volume flow can be supplied to the hydraulic sink (12).

2. Hydraulic system according to claim 1, **characterised in that**, in the holding operation and in the sinking operation, hydraulic fluid can be returned, in a return volume flow, to the hydraulic sink (12) by means of the tipping valve (18) on the basis of a current discharge volume flow of the hydraulic source (16).

3. Hydraulic system according to claim 2, **characterised in that** the suction pump is designed as a jet pump (200) by means of which the return volume flow can be supplied to the hydraulic sink (12) as a working-fluid stream for a suction operation of the jet pump.

4. Hydraulic system according to claim 3, **characterised in that** a suction power of the jet pump (200), during the suction operation thereof, can be controlled by a motor which drives a pump of the hydraulic source (16).

5. Hydraulic system according to either claim 3 or claim 4, **characterised in that** the jet pump (200) is designed as an integral component of a fluid reservoir of the hydraulic sink (12), in particular of a hydraulic port assembly of the fluid reservoir.

6. Hydraulic system according to claim 5, **characterised in that** a port (204) of the jet pump (200) associated with a suction side forms a return port of the fluid reservoir for returning hydraulic fluid from the hydraulic cylinder (24), bypassing the tipping valve (18), and a working-fluid port (202) of the jet pump forms a return port of the fluid reservoir for returning hydraulic medium from the tipping valve (18).

7. Hydraulic system according to any of claims 3 to 6, **characterised in that** a/the suction side of the jet pump is or can be connected, by means of the valve (212), to a discharge port of the hydraulic cylinder (24) or to a portion (22) of the hydraulic system that connects the tipping valve (18) to the hydraulic cylinder, such that the discharge volume flow can be discharged to the hydraulic sink (12) by means of the jet pump (200), bypassing the tipping valve (18), for the sinking operation of the hydraulic cylinder.

8. Hydraulic system according to any of claims 1 to 7, **characterised in that** the valve (212) is designed as a preferably electrically actuatable 2/2-way valve.

9. Hydraulic system according to any of claims 1 to 7, **characterised in that** the valve (110) is part of a valve assembly (100) which is hydraulically connected to at least the hydraulic cylinder (24), the tipping valve (18) and the hydraulic sink (12), by means of which assembly, depending on operating conditions of at least the tipping valve (18), hydraulic fluid can be supplied, in a supply volume flow, to the hydraulic cylinder (24) for the lifting operation based on the/a discharge volume flow of the hydraulic source (16) and hydraulic fluid can be discharged, in the discharge volume flow, from the hydraulic cylinder (24) to the hydraulic sink (12), bypassing the tipping valve (18), for the sinking operation, the valve assembly (100) and the tipping valve (18) being preferably designed and hydraulically interconnected such that the discharge volume flow can be continuously controlled or regulated by means of the tipping valve (18).

10. Hydraulic system according to any of claims 1 to 9, **characterised in that** the discharge volume flow can be controlled or regulated by means of the tipping valve (18) according to an actuation of the tipping valve and/or on the basis of a volume flow of hydraulic fluid through the tipping valve (18).

11. Hydraulic system according to claim 10, **characterised in that**, for inducing the sinking operation, hydraulic fluid can be discharged, in a control volume flow, from the valve assembly (100) to the hydraulic sink (12) by means of the tipping valve (18), and **in that** the resulting discharge volume flow continuously depends on the control volume flow and optionally increases linearly or progressively or degressively therewith.

12. Hydraulic system according to claim 11, **characterised in that** the valve assembly comprises at least one continuous valve (110) having at least one valve element (112) which can be continuously moved between a first position which is occupied during the lifting operation and the holding operation and a second position which is occupied during the sinking operation at maximum discharge volume flow, which element, when moving from the first position towards the second position, is designed to open in a controlled manner at least one primary control passage (148, 152) by means of which hydraulic fluid can be discharged from a first side of the continuous valve (110) associated with the hydraulic cylinder (24) to a second side of the continuous valve (110) associated with the tipping valve (18), as a result of the discharge of the control volume flow from the second side of the continuous valve (110) to the hydraulic sink (12) by means of the tipping valve (18), the valve element (112) preferably exposing a minimum opening cross section of the primary control passage (148, 152) in the first position.

13. Hydraulic system according to claim 12, **characterised in that** the valve element (112), when moving from the first position towards the second position, is designed to open in a controlled manner at least one secondary control passage (150, 151) by means of which the discharge volume flow can be discharged to the hydraulic sink (12), bypassing the tipping valve (18), for the sinking operation, the secondary control passage (150, 151) preferably being closed in the first position of the valve element (112).

14. Hydraulic system according to any of claims 9 to 13, **characterised in that** the valve assembly (100) forms at least one hydraulic 3-way switch (100) and/or at least one continuous valve (110) preferably designed as a 2-way seat valve and/or as a Valvistor.

15. Hydraulic system according to any of claims 9 to 14, **characterised in that** a suction side of the suction pump designed as a jet pump (200) is connected to the valve assembly (100) such that the discharge volume flow can be discharged to the hydraulic sink (12), bypassing the tipping valve (18), by means of the jet pump (200) for the sinking operation of the hydraulic cylinder.

## Revendications

1. Système hydraulique pour le pivotement d'au moins un pont basculant se trouvant sur un véhicule à benne, comprenant :
- au moins un cylindre hydraulique (24) en tant que groupe d'entraînement de pivotement pour le pont basculant,
- au moins une soupape pivotante (18) pour la commande d'au moins une opération de levage et d'une opération de maintien du cylindre hydraulique,
- au moins une descente hydraulique (12) et au moins une source hydraulique (16), ainsi que
- au moins une soupape (110 ; 212) en liaison hydraulique au moins avec le cylindre hydraulique (24) et la descente hydraulique (12), par le biais de laquelle un fluide hydraulique peut être évacué du cylindre hydraulique (24) dans un débit volumique d'évacuation en contournant la soupape pivotante (18) vers la descente hydraulique (12) pour une opération de descente du cylindre hydraulique,
**caractérisé par** une pompe d'aspiration (200) assurant l'évacuation du fluide hydraulique dans le débit volumique d'évacuation en contournant la soupape pivotante (18), par le biais de laquelle au moins un débit volumique partiel du débit volumique d'évacuation peut être amené à la descente hydraulique (12).

2. Système hydraulique selon la revendication 1,
**caractérisé en ce qu'**un fluide hydraulique peut être retourné dans un débit volumique de retour vers la descente hydraulique (12) dans l'opération de maintien et dans l'opération de descente sur la base d'un débit volumique de distribution instantané de la source hydraulique (16) au moyen de la soupape pivotante (18).

3. Système hydraulique selon la revendication 2,
**caractérisé en ce que** la pompe d'aspiration est réalisée en tant que pompe à jet (200), par le biais de laquelle le débit volumique de retour peut être amené à la descente hydraulique (12) en tant que courant d'agent propulseur pour une opération d'aspiration de la pompe à jet.

4. Système hydraulique selon la revendication 3,
**caractérisé en ce qu'**une puissance d'aspiration de la pompe à jet (200) peut être commandée dans son opération d'aspiration au moyen d'un moteur entraînant une pompe de la source hydraulique (16).

5. Système hydraulique selon l'une quelconque des revendications 3 et 4,
**caractérisé en ce que** la pompe à jet (200) est réalisée en tant que partie intégrante d'un réservoir de fluide de la descente hydraulique (12), en particulier d'un ensemble de raccord hydraulique du réservoir de fluide.

6. Système hydraulique selon la revendication 5,
**caractérisé en ce qu'**un raccord (204) de la pompe à jet (200) associé à un côté aspiration forme un raccord de reflux du réservoir de fluide pour un reflux de fluide hydraulique du cylindre hydraulique (24) en contournant la soupape pivotante (18) et un raccord d'agent propulseur (202) de la pompe à jet forme un raccord de reflux du réservoir de fluide pour un reflux de milieu hydraulique de la soupape pivotante (18).

7. Système hydraulique selon l'une quelconque des revendications 3 à 6,
**caractérisé en ce qu'**un/le côté aspiration de la pompe à jet est raccordé ou peut être raccordé par le biais de la soupape (212) au niveau d'un raccord d'évacuation du cylindre hydraulique (24) ou d'une section (22) du système hydraulique reliant la soupape pivotante (18) au cylindre hydraulique de sorte que le débit volumique d'évacuation puisse être évacué par le biais de la pompe à jet (200) vers la descente hydraulique (12) en contournant la soupape pivotante (18) pour l'opération de descente du cylindre hydraulique,

8. Système hydraulique selon l'une quelconque des revendications 1 à 7,
**caractérisé en ce que** la soupape (212) est réalisée en tant que soupape 2/2 voies, de préférence à commande électrique.

9. Système hydraulique selon l'une quelconque des revendications 1 à 7,
**caractérisé en ce que** la soupape (110) appartient à un ensemble de soupape (100) en liaison hydraulique au moins avec le cylindre hydraulique (24), la soupape pivotante (18) et la descente hydraulique (12), par le biais duquel en fonction d'états de fonctionnement au moins de la soupape pivotante (18) sur la base du/d'un débit volumique de distribution de la source hydraulique (16), un fluide hydraulique peut être amené au cylindre hydraulique (24) dans un débit volumique d'amenée pour l'opération de levage et un fluide hydraulique peut être évacué du cylindre hydraulique (24) dans le débit volumique d'évacuation en contournant la soupape pivotante (18) vers la descente hydraulique (12) pour l'opération de descente,
dans lequel l'ensemble de soupape (100) et la soupape pivotante (18) sont de préférence réalisés et reliés hydrauliquement l'un à l'autre de telle sorte que le débit volumique d'évacuation puisse être commandé ou régulé en continu au moyen de la soupape pivotante (18).

10. Système hydraulique selon l'une quelconque des revendications 1 à 9,
**caractérisé en ce que** le débit volumique d'évacuation peut être commandé ou régulé au moyen de la soupape pivotante (18) conformément à une commande de la soupape pivotante ou/et en fonction d'un débit volumique de fluide hydraulique par la soupape pivotante (18).

11. Système hydraulique selon la revendication 10,
**caractérisé en ce que** pour provoquer l'opération de descente, un fluide hydraulique peut être évacué dans un débit volumique de commande de l'ensemble de soupape (100) à la descente hydraulique (12) par le biais de la soupape pivotante (18) et que le débit volumique d'évacuation en résultant dépend en continu du débit volumique de commande, augmente éventuellement de manière linéaire ou progressive ou dégressive avec celui-ci.

12. Système hydraulique selon la revendication 11,
**caractérisé en ce que** l'ensemble de soupape comprend au moins une soupape continue (110) avec au moins un élément de soupape (112) réglable en continu entre une première position adoptée dans l'opération de levage et dans l'opération de maintien et une deuxième position adoptée dans l'opération de descente pour un débit volumique d'évacuation maximum, lequel est réalisé pour commander lors d'un déplacement de la première position en direction de la deuxième position l'ouverture d'au moins un passage de commande primaire (148, 152), par le biais duquel un fluide hydraulique peut être évacué d'un premier côté de la soupape continue (110) associé au cylindre hydraulique (24) vers un deuxième côté de la soupape continue (110) associé à la soupape pivotante (18), suite à l'évacuation du débit volumique de commande du deuxième côté de la soupape continue (110) vers la descente hydraulique (12) par le biais de la soupape pivotante (18),
dans lequel l'élément de soupape (112) dans la première position libère de préférence une section transversale d'ouverture minimum du passage de commande primaire (148, 152).

13. Système hydraulique selon la revendication 12,
**caractérisé en ce que** l'élément de soupape (112) est réalisé pour commander, lors d'un déplacement de la première position en direction de la deuxième position, l'ouverture d'au moins un passage de commande secondaire (150, 151), par le biais duquel le débit volumique d'évacuation peut être évacué en contournant la soupape pivotante (18) vers la descente hydraulique (12) pour l'opération de descente,
dans lequel le passage de commande secondaire (150, 151) est de préférence fermé dans la première position de l'élément de soupape (112).

14. Système hydraulique selon l'une quelconque des revendications 9 à 13,
**caractérisé en ce que** l'ensemble de soupape (100) forme au moins un aiguillage 3 voies hydraulique (100) et/ou comprend au moins une soupape continue (110) réalisée en tant que soupape à siège 2 voies et/ou en tant que Valvistor.

15. Système hydraulique selon l'une quelconque des revendications 9 à 14,
**caractérisé en ce qu'**un côté aspiration de la pompe d'aspiration réalisée en tant que pompe à jet (200) est raccordé à l'ensemble de soupape (100) de sorte que le débit volumique d'évacuation puisse être évacué en contournant la soupape pivotante (18) vers la descente hydraulique (12) pour l'opération de descente du cylindre hydraulique par le biais de la pompe à jet (200).
